# EUROPEAN PATENT APPLICATION

(11) **EP 1 199 900 A2**
(43) Date of publication of application: **24.04.2002**
(21) Application number: 01124905.9
(22) Date of filing: 18.10.2001
(51) Int. Cl.: H04Q 7/32, H04B 1/38

(54) **Mobile communication terminal**

(30) Priority: 19.10.2000 JP 2000324695
(71) Applicant: NEC CORPORATION, Tokyo (JP)
(72) Inventor: Usami, Shinya, Minato-ku (JP)
(74) Representative: VOSSIUS & PARTNER

(57) **Abstract**

A mobile communication terminal, which prevents an instrument such as a medical electronic instrument from malfunctioning caused by radio waves generated by the mobile communication terminal and also can operate processes not operating its communication function such as viewing transmitted/received e-mails, making e-mails, displaying obtained Web site images, and playing games, by a simple operation that makes only the power supply of the transmitting/receiving section on/off, is provided. The mobile communication terminal provides a controlling means that controls the power supply of the transmitting/receiving section, and an inputting means that informs the controlling means about an instruction inputted from a user. And the controlling means makes the power supply of the transmitting/receiving section off, when the user instructed so that the power supply of the transmitting/receiving section was made to be off by using the inputting means. And the controlling means makes the power supply of the transmitting/receiving section on, when the user instructed so that the power supply of the transmitting/receiving section was made to be on by using the inputting means. Further, the mobile communication terminal provides a state informing means that informs surrounding persons about that the power supply of the transmitting/receiving section is off.

## Description

The present invention relates to a mobile communication terminal whose power supply of transmitting/receiving section can be made to be on/off by a simple operation. In particular, the mobile communication terminal prevents a bad influence to instruments such as medical electronic instruments, which may malfunction by radio waves generated by the mobile communication terminal existing close to the medical electronic instruments, by the simple operation that makes the power supply of the transmitting/receiving section off. And further the mobile communication terminal can operate processes, which do not operate the communication function being the cause for the malfunction, such as viewing transmitted/received e-mails, displaying obtained Web site images, and playing games.

### Description of the Related Art

Mobile communication terminals such as cellular phones and personal handy-phone system (PHS) terminals have been widely used, however, it is known that radio waves generated at their communication may cause malfunction of medical electronic instruments such as a cardiac pacemaker, that is, electromagnetic interference may occur. And some users of the mobile communication terminal give uncomfortable feeling such as noise to other persons at public places and facilities such as in a train, a concert hall, and a movie theater. Therefore, at these public places and facilities, the users are obliged to turn off the main power supply of the mobile communication terminal, or a rule, which the mobile communication terminals are not allowed to use, is applied to the users.

Recently, some mobile communication terminals have a transmitting/receiving function of e-mails, a function accessing to the Internet, and further a function processing programs of games, in addition to the basic communication function.

Except this basic communication function, the transmitting/receiving function of e-mails and the function accessing to the Internet are executed without speech, therefore these operations do not give any uncomfortable feeling to other persons, however, these operations are executed with data communication and may cause some malfunction to instruments existing close to the mobile communication terminal.

When a user makes the mobile communication terminal process a program such as of a game, display transmitted and received e-mails, and also display received Web sites, these processes are executed without speech and also the data communication. Therefore, problems such as the electromagnetic interference and bad manners do not occur.

However, other persons can not judge whether the user of the mobile communication terminal is using a communication function or not. Therefore, in order to prevent the problems mentioned above, users are obliged not to use the mobile communication terminal by switching off the main power supply of the mobile communication terminal.

Therefore, it has been requested that users can use the functions except the communication function of the mobile communication terminal, even when the users are at public places and facilities.

As a first conventional technology, Japanese Patent Application Laid-Open No. HEI 10-135891 discloses a control method of a mobile communication terminal. In this technology, when a mobile communication terminal passes through (enters and goes out of) a radio area where radio equipment forms, the radio equipment transmits signals that instruct the mobile communication terminal to change its setting. And the mobile communication terminal changes its various kinds of setting based on the signals received from the radio equipment. With this, the various states of the mobile communication terminal are controlled by the signals from the radio equipment. That is, the mobile communication terminal is controlled not to use at some radio area.

As a second conventional technology, Japanese Patent Application Laid-Open No. HEI 11-127101 discloses a power supply off system by remote control. In this technology, when a mobile communication terminal entered a facility where the user of the mobile communication terminal had to switch off the power supply, the power supply of the mobile communication terminal is automatically switched off regardless of the operating state of the mobile communication terminal.

However, according to the first conventional technology, the uncomfortable feeling and complaints for noise by other persons and the malfunction of medical electronic instruments at public places and facilities can be prevented, without complex processes by users of the mobile communication terminal. However, in order to make this technology effective, it is necessary to install this function to all the mobile communication terminals, and also this radio equipment has to be installed at all necessary public places and facilities.

And when the radio equipment is not installed at all of the necessary public places and facilities, the user of the mobile communication terminal has to investigate whether the radio equipment is installed or not in the place and facility. And when the radio equipment is not installed at the facility, the users of the mobile communication terminals have to switch off the main power supply as usual.

Furthermore, when this function is not installed in all of the mobile communication terminals, other persons cannot recognize whether the mobile communication terminal is in a communication state or not. Consequently, it is necessary to make the users of the mobile communication terminals switch off the main power supply.

As mentioned above, any measures to slove the problems mentioned above are not described in the first conventional technology.

According to the second conventional technology, it is possible to prevent a ringing tone from starting to ring suddenly at the facilities where this system is installed and the mobile communication terminals are not allowed to use. And also it is completely possible to prevent medical electronic instruments from malfunctioning causing by radio waves transmitting from the mobile communication terminals at the facilities where this system is installed. However, as the same as the first conventional technology, it is necessary to install this system in all of the necessary public places and facilities, and also all the mobile communication terminals have to provide this function (receiving signals from the system). And the main power supply of all of the mobile communication terminals is switched off in the facilities installing the system, however, any measures to solve the problems mentioned above are not also described in the second conventional technology.

It is therefore an object of the present invention to provide a mobile communication terminal, which prevents instruments such as medical electronic instruments from malfunctioning by radio waves generated by the mobile communication terminal existing close to the medical electronic instrument, and also can operate processes, which do not operate the communication function, such as making e-mails, viewing transmitted/received e-mails, displaying obtained Web site images, and processing programs of games, by a simple process switching on/off the power supply of transmitting/receiving section of the mobile communication terminal. And further the present invention provides a mobile communication terminal whose power supply off state of the transmitting/receiving section is informed to persons surrounding the mobile communication terminal. And when the power supply of the transmitting/receiving section of the mobile communication terminal is switched off, the setting of its notifying sound volume of such as a ringing tone can be changed.

According to a first aspect of the present invention, for achieving the object mentioned above, there is provided a mobile communication terminal. The mobile communication terminal provides a controlling means that controls the power supply of the transmitting/receiving section, and an inputting means that informs the controlling means about an instruction inputted from a user. And the controlling means makes the power supply of the transmitting/receiving section off, when the user instructed so that the power supply of the transmitting/receiving section was made to be off by using the inputting means, and the controlling means makes the power supply of the transmitting/receiving section on, when the user instructed so that the power supply of the transmitting/receiving section was made to be on by using the inputting means.

According to a second aspect of the present invention, in the first aspect, the inputting means provides a special button to which the user inputs only the instruction to control the power supply of the transmitting/receiving section, and informs the controlling means about the instruction when the special button was pushed, and the controlling means makes the power supply of the transmitting/receiving section off, when that the special button was pushed was informed from the inputting means, in case that the power supply of the transmitting/receiving means is on, and the controlling means makes the power supply of the transmitting/receiving section on, when that the special button was pushed was informed from the inputting means, in case that the power supply of the transmitting/receiving means is off.

According to a third aspect of the present invention, in the first aspect, the inputting means informs the controlling means about the instruction so that the controlling means controls the power supply of the transmitting/receiving section, when the user pushed a designated button providing in the inputting means for originally another purpose for more than a designated time, and the controlling means makes the power supply of the transmitting/receiving section off, when the controlling means received the information from the inputting means by using the designated button, in case that the power supply of the transmitting/receiving section is on, and the controlling means makes the power supply of the transmitting/receiving section on, when the controlling means received the information from the inputting means by using the designated button, in case that the power supply of the transmitting/receiving section is off.

According to a fourth aspect of the present invention, in the first aspect, a mobile communication terminal further provides a state informing means that informs surrounding persons about that the power supply of the transmitting/receiving section is off.

According to a fifth aspect of the present invention, in the fourth aspect, a display section, which is originally used as displaying various information of the mobile communication terminal, is also used as the state informing means.

According to a sixth aspect of the present invention, in the fourth aspect, a notifying section, which is originally used as notifying about a ringing tone and various states of the mobile communication terminal, is also used as the state informing means.

According to a seventh aspect of the present invention, in the fourth aspect, the state informing means provides a lamp (LED) or a display, and the lamp (LED) is turned on or is being flashed when the power supply of the transmitting/receiving section was made to be off, or the information that the transmitting/receiving section was made to be off is being displayed on the display.

According to an eighth aspect of the present invention, in the first aspect, the controlling means provides a means that makes setting of notifying sound volume of a notifying section, which is used as notifying about a ringing tone and various states of the mobile communication terminal, on/off. And the means makes the setting of the notifying sound volume off, in case that the power supply of the transmitting/receiving section is off and the setting of the notifying sound volume is on, and makes the setting of the notifying sound volume on, in case that the power supply of the transmitting/receiving section became on after the setting of the notifying sound volume was made to be off.

The objects and features of the present invention will become more apparent from the consideration of the following detailed description taken in conjunction with the accompanying drawings in which:
Fig. 1 is a block diagram showing a structure of a mobile communication terminal at embodiments of the present invention;
Fig. 2 is a flowchart showing an operation of processes switching on/off the power supply of the transmitting/receiving section of the mobile communication terminal at a first embodiment of the present invention; and
Fig. 3 is a flowchart showing an operation of processes switching on/off the power supply of the transmitting/receiving section of the mobile communication terminal at a second embodiment of the present invention.

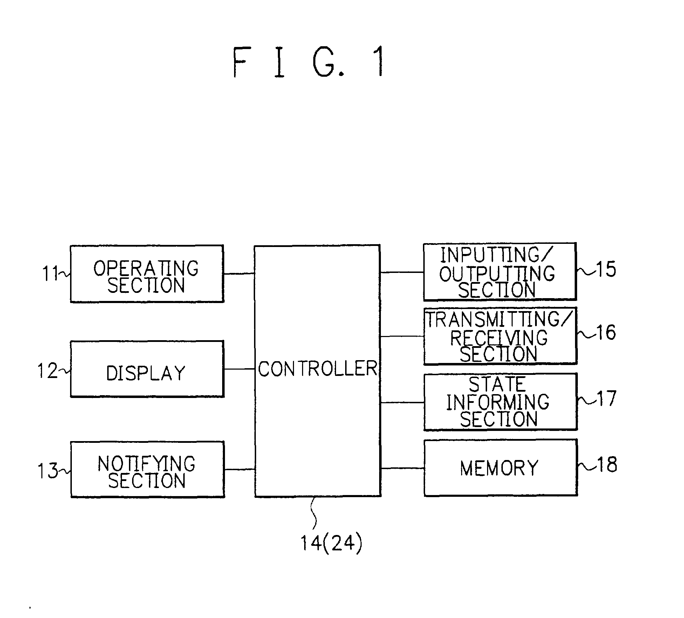

Referring now to the drawings, embodiments of the present invention are explained in detail. Fig. 1 is a block diagram showing a structure of a mobile communication terminal at the embodiments of the present invention. As shown in Fig. 1, the mobile communication terminal at the embodiments of the present invention consists of an operating section 11, a display 12, a notifying section 13, a controller 14 (24), an inputting/outputting section 15, a transmitting/receiving section 16, a state informing section 17, and a memory 18.

The operating section 11 is a section to which a user inputs control instructions for the mobile communication terminal. The display 12 displays states of the mobile communication terminal, and arbitrary and designated information. The notifying section 13 notifies the user a ringing tone and state changes of the mobile communication terminal. The inputting/outputting section is a section to which the user inputs his/her voice and from which the voice of a communicating person is outputted. The transmitting/receiving section 16 transmits and receives data. The state informing section 17 informs persons surrounding the mobile communication terminal about the state of the transmitting/receiving section 16. The memory 18 stores various information such as telephone numbers and setting of the mobile communication terminal. The controller 14 (24) controls the operation of sections and units in the mobile communication terminal.

In this, the function of the state informing section 17 can be realized by using the display 12 and/or the notifying section 13.

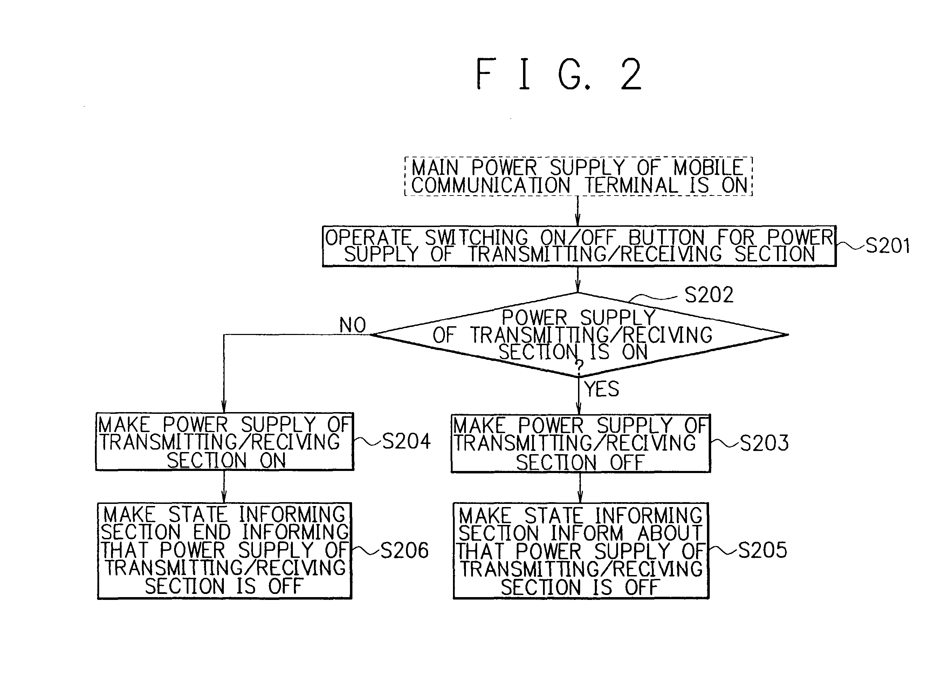

Fig. 2 is a flowchart showing an operation of processes switching on/off the power supply of the transmitting/receiving section 16 of the mobile communication terminal at a first embodiment of the present invention. Referring to Fig.2, the operation being a control method of the processes switching on/off the power supply of the transmitting/receiving section 16 of the mobile communication terminal at the first embodiment of the present invention is explained.

The operation of these processes is explained at a state that the main power supply of the mobile communication terminal is on. At this state, first, a user operates a switching on/off button for the power supply of the transmitting/receiving section 16 by using the operating section 11 and instructs to make the power supply of the transmitting/receiving section 16 off at a situation that the user needs to switch off (step S201). This process can be done by that the user pushes a special button provided only for switching on/off the power supply of the transmitting/receiving section 16 at the operating section 11. Or this operation can be done by that the user pushes another button, provided at the operating section 11 and using for another purpose, for a designated time just for purpose of switching on/off the power supply of the transmitting/receiving section 16, instead of providing the special button.

The controller 14 investigates whether the power supply of the transmitting/receiving section 16 is on or not by receiving this instruction of the user (step S202).

When the power supply of the transmitting/receiving section 16 is on (YES at the step S202), the controller 14 makes the power supply of the transmitting/receiving section 16 off (step S203). After this, the controller 14 makes the state informing section 17 inform surrounding persons about that the power supply of the transmitting/receiving section 16 is off (step S205).

This informing process is enough when that the power supply state of the transmitting/receiving section 16 is off can be informed to surrounding persons (other persons), and it is desirable that this informing operation does not give any uncomfortable feeling such as noise to the surrounding persons. Therefore, it is desirable that this information is visually given to the surrounding persons.

For example, a lamp (LED) using only for this informing operation is provided in the state informing section 17, and the information, which the power supply of the transmitting/receiving section 16 is off, is informed to the surrounding persons by that this lamp (LED) is turned on or is being flashed. Or a display using only for this informing operation is provided in the state informing section 17, for example, on the back face of the mobile communication terminal, instead of the lamp (LED), and this information, which the power supply of the transmitting/receiving section 16 is off, is being displayed on this display. Further, this information can be displayed on the display 12 and/or can be informed from the notifying section 13, instead of that the state informing section 17 informs of that the power supply of the transmitting/receiving section 16 is off.

When the power supply of the transmitting/receiving section 16 is off (NO at the step S202) and the mobile communication terminal is not at a specified public place or facility, the controller 14 makes the power supply of the transmitting/receiving section 16 on by the instruction of the user at the operating section 11 (step S204). After this, the controller 14 makes the state informing section 17 end the informing operation to inform that the power supply of the transmitting/receiving section 16 is off (step S206).

As mentioned above, only the power supply of the transmitting/receiving section 16 is made to be off by the operation mentioned above, that is, the operation using the transmitting/receiving section 16 being the communication function cannot be worked. However, since only the power supply of the transmitting/receiving section 16 is made to be off and the main power supply of the mobile communication terminal is on, the user can operate processes, in which the communication is not executed, such as making e-mails, confirming the contents of the transmitted and received e-mails, displaying the obtained Web sites images, playing games not using the communication function.

Furthermore, the state, which the user is not using the communication function, that is, the communication function cannot be used, is informed to the surrounding persons, therefore the surrounding persons can easily recognize that the user is not communicating with other person. That is, the user can use the functions not being the communication function under that the user makes the surrounding persons recognize that the user is not using communication processes. Therefore other persons do not need to make the user stop using the mobile communication terminal or to make the user off the main power supply of the mobile communication terminal even at the specified public places or facilities.

And also the user can easily make the power supply of the transmitting/receiving section 16 on, when the user comes at a place where the user can use the communication function, therefore the user can immediately use the communication function such as to communicate with other person.

At the first embodiment mentioned above, it is also possible that the informing operation, which the off state of the power supply of the transmitting/receiving section 16 is informed to other persons, is not executed, that is, the user does not inform other persons about the state that the user is not using the communication function. In this case, the mobile communication terminal does not need the informing function, and only needs the function to make the power supply of the transmitting/receiving section 16 on/off by using the operating section 11. Consequently, a mobile communication terminal having simple functions can be provided.

Next, a second embodiment of the present invention is explained. A mobile communication terminal at the second embodiment of the present invention consists of an operating section 11, a display 12, a notifying section 13, a controller 24, an inputting/outputting section 15, a transmitting/receiving section 16, a state informing section 17, and a memory 18. At the second embodiment of the mobile communication terminal of the present invention, the controller 24 is used instead of the controller 14 at the first embodiment. And the other sections and units are the same that the first embodiment has, therefore the same explanation is omitted.

The controller 24 has an additional function to control the notifying section 13 whose basic functions are to notify the user about a ringing tone when the mobile communication terminal receives a call and about states when the states of the mobile communication terminal were changed. Actually, the controller 24 has a function that makes the sound volume of the notifying section 13 off. With this, the controller 24 controls the operation of the notifying section 13 at a specified public place and facility, and it becomes possible that the mobile communication terminal does not give any uncomfortable feeling such as noise to surrounding persons.

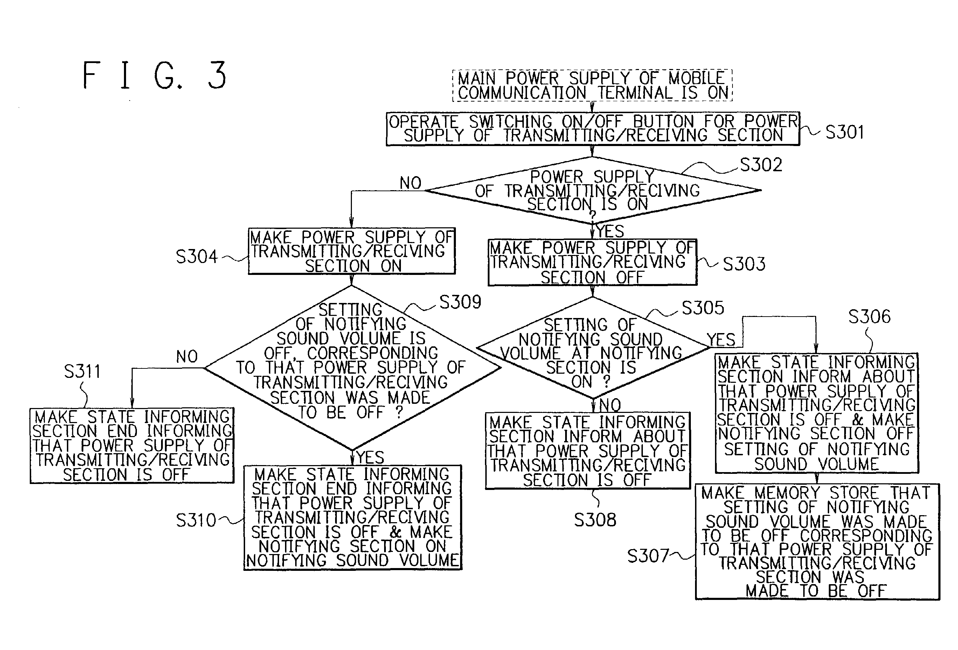

Fig. 3 is a flowchart showing an operation of processes switching on/off the power supply of the transmitting/receiving section 16 of the mobile communication terminal at the second embodiment of the present invention. Referring to Fig.2, the operation being a control method of the processes switching on/off the power supply of the transmitting/receiving section 16 of the mobile communication terminal at the second embodiment of the present invention is explained.

The operation of these processes is explained at a state that the main power supply of the mobile communication terminal is on. At this state, a user operates a switching on/off button for the power supply of the transmitting/receiving section 16 by using the operating section 11 and instructs to make the power supply of the transmitting/receiving section 16 off at a situation that the user needs to switch off (step S301). As mentioned at the first embodiment, this operation can be done by that the user pushes a special button using only for switching on/off the power supply of the transmitting/receiving section 16 provided at the operating section 11. Or this operation can be done by that the user pushes another button, provided at the operating section 11 and using for another purpose, for a designated time just for purpose of switching on/off the power supply of the transmitting/receiving section 16, instead of providing the special button.

The controller 24 investigates whether the power supply of the transmitting/receiving section 16 is on or not by receiving this instruction of the user (step S302).

When the power supply of the transmitting/receiving section 16 is on (YES at the step S302), the controller 14 makes the power supply of the transmitting/receiving section 16 off (step S303).

And the controller 24 investigates whether the setting of notifying sound volume at the notifying section 13 is on or not (step S305). In this, at this setting of the notifying sound volume, the following setting is defined. That is, in case that the notifying section 13 outputs the notifying sound, this case is set as that the setting of the notifying sound volume is on. And in case that the notifying section 13 does not output the notifying sound, this case is set as that the setting of the notifying sound volume is off. However, the setting of the notifying sound volume is not limited to the setting mentioned above. For example, a threshold value of the notifying sound volume is defined, and in case that the sound volume is set to be a value exceeding the threshold value, the setting of the notifying sound volume is defined as on. And in case that the sound volume is set to be a value lower than the threshold value, the setting of the notifying sound volume is defined as off. This setting can be also usable.

When the setting of the notifying sound volume is on (YES at the step S305), the controller 24 makes the state informing section 17 inform about that the power supply of the transmitting/receiving section 16 is off to the surrounding persons, and also makes the notifying section 13 off the setting of the notifying sound volume (step S306). And the controller 24 makes the memory 18 store information concerning the setting of the notifying sound volume including that the setting of the notifying sound volume was made to be off corresponding to that the power supply of the transmitting/receiving section 16 was made to be off (step S307).

When the setting of the notifying sound volume is off (NO at the step S305), the controller 24 makes the state informing section 17 inform about that the power supply of the transmitting/receiving section 16 is off to the surrounding persons (step S308). In this, the setting of the notifying sound volume was already set to be off, therefore, any action does not take for the notifying section 13.

Further, this information can be displayed on the display 12, instead of that the state informing section 17 informs that the power supply of the transmitting/receiving section 16 is off.

When the power supply of the transmitting/receiving section 16 is off (NO at the step S302) and the mobile communication terminal is not at a specified public place or facility, the controller 24 makes the power supply of the transmitting/receiving section 16 on by the instruction from the user at the operating section 11 (step S304). And the controller 24 searches for the information concerning the setting of the notifying sound volume storing in the memory 18, and confirms whether the setting of the notifying sound volume was set to be off or not, corresponding to that the power supply of the transmitting/receiving section 16 was made to be off (step S309).

When the setting of the notifying sound volume is being made to be off corresponding to that the power supply of the transmitting/receiving section 16 was made to be off (YES at the step S309), the controller 24 makes the state informing section 17 end the process informing that the power supply of the transmitting/receiving section 16 is off, and also makes the notifying section 13 on the setting of the notifying sound volume (step S310). With this, the setting change of the notifying sound volume at the step S306 is cancelled, that is, the setting of the notifying sound volume is made to be on.

When the setting of the notifying sound volume remains to be off regardless of that the power supply of the transmitting/receiving section 16 was made to be off (NO at the step S309), the controller 24 makes the state informing section 17 end the process informing that the power supply of the transmitting/receiving section 16 is off (step S311). In this, the change of the setting of the notifying sound volume is not executed, because the setting of the notifying sound volume is off from the beginning.

As mentioned above, according to the second embodiment of the mobile communication terminal of the present invention, the user can operate processes except the communication functions such as, making e-mails, viewing the transmitted and received e-mails, displaying the screens of the obtained Web sites on the Internet, playing games, at specified public places and facilities. And also the notifying sound volume can be changed, therefore the uncomfortable feeling such as noise for other persons can be prevented.

In this, it is possible that the controller 24 does not make the state informing section 17 inform the surrounding persons about that the power supply of the transmitting/receiving section 16 was made to be off. In this case, only the power supply of the transmitting/receiving section 16 is made to be off and also the setting of the notifying sound volume of the notifying section 13 is made to be off without informing the surrounding persons about the power supply of the transmitting/receiving section 16 is off.

As mentioned above, according to the present invention, a mobile communication terminal can be made to be a state that its communication function does not work by a simple operation at places such as specified public places and facilities. With this, instruments such as medical electronic instruments can be prevented from malfunctioning caused by radio waves, and the operation except the communication function can be executed at the mobile communication terminal

Furthermore, according to the present invention, the state that the communication function of the mobile communication terminal does not work, that is, the state that the mobile communication terminal dose not generate radio waves, which may cause some malfunction of instruments such the medical electronic instruments, can be informed to persons surrounding the mobile communication terminal. Therefore, all of the main power supplies of the mobile communication terminals are not needed to be off at specified public places and facilities. And also the users of the mobile communication terminals can operate functions except their communication function by making the surrounding persons know that the users do not operate the communication function.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. A mobile communication terminal, comprising:
a controlling means that controls the power supply of the transmitting/receiving section; and
an inputting means that informs said controlling means about an instruction inputted from a user, wherein:
said controlling means makes said power supply of said transmitting/receiving section off, when said user instructed so that said power supply of said transmitting/receiving section was made to be off by using said inputting means, and
said controlling means makes said power supply of said transmitting/receiving section on, when said user instructed so that said power supply of said transmitting/receiving section was made to be on by using said inputting means.

2. A mobile communication terminal in accordance with claim 1, wherein:
said inputting means provides a special button to which said user inputs only said instruction to control said power supply of said transmitting/receiving section, and informs said controlling means about said instruction when said special button was pushed, and
said controlling means makes said power supply of said transmitting/receiving section off, when that said special button was pushed was informed from said inputting means, in case that said power supply of said transmitting/receiving means is on, and
said controlling means makes said power supply of said transmitting/receiving section on, when that said special button was pushed was informed from said inputting means, in case that said power supply of said transmitting/receiving means is off.

3. A mobile communication terminal in accordance with claim 1, wherein:
said inputting means informs said controlling means about said instruction so that said controlling means controls said power supply of said transmitting/receiving section, when said user pushed a designated button providing in said inputting means for originally another purpose for more than a designated time, and
said controlling means makes said power supply of said transmitting/receiving section off, when said controlling means received said information from said inputting means by using said designated button, in case that said power supply of said transmitting/receiving section is on, and
said controlling means makes said power supply of said transmitting/receiving section on, when said controlling means received said information from said inputting means by using said designated button, in case that said power supply of said transmitting/receiving section is off.

4. A mobile communication terminal in accordance with any of claims 1 to 3, further comprising:
a state informing means that informs surrounding persons about that said power supply of said transmitting/receiving section is off.

5. A mobile communication terminal in accordance with claim 4, wherein:
a display section, which is originally used as displaying various information of said mobile communication terminal, is also used as said state informing means.

6. A mobile communication terminal in accordance with claim 4, wherein:
a notifying section, which is originally used as notifying about a ringing tone and various states of said mobile communication terminal, is also used as said state informing means.

7. A mobile communication terminal in accordance with claim 4, wherein:
said state informing means provides a lamp (LED) or a display, and said lamp (LED) is turned on or is being flashed when said power supply of said transmitting/receiving section was made to be off, or the information that said transmitting/receiving section was made to be off is being displayed on said display.

8. A mobile communication terminal in accordance with any of claims 1 to 7, wherein:
said controlling means, comprising:
a means that makes setting of notifying sound volume of a notifying section, which is used as notifying about a ringing tone and various states of said mobile communication terminal, on/off, wherein:
said means makes said setting of said notifying sound volume off, in case that said power supply of said transmitting/receiving section is off and said setting of said notifying sound volume is on, and makes said setting of said notifying sound volume on, in case that said power supply of said transmitting/receiving section became on after said setting of said notifying sound volume was made to be off.
